Europäisches Patentamt

**European Patent Office**

**Office européen des brevets**

(11) Veröffentlichungsnummer: **0 034 189**

**A1**

(12) # EUROPÄISCHE PATENTANMELDUNG

(21) Anmeldenummer: **80100729.5**

(22) Anmeldetag: **13.02.80**

(51) Int. Cl.³: **B 63 H 9/06**
**D 06 N 3/00**

(43) Veröffentlichungstag der Anmeldung:
**26.08.81 Patentblatt 81/34**

(84) Benannte Vertragsstaaten:
**CH DE FR GB NL SE**

(71) Anmelder: **VERSEIDAG-INDUSTRIETEXTILIEN GMBH**
**Industriestrasse 56 Postfach 4080**
**D-4150 Krefeld 1(DE)**

(72) Erfinder: **Ploentges, Margret**
**Bergiusstrasse 22**
**D-4152 Kempen 1(DE)**

(72) Erfinder: **Cox, Herbert**
**Lange Bahn 3**
**D-4170 Geldern 3(DE)**

(72) Erfinder: **Schreus, Theo**
**Dietrich-Bonhöfer-Strasse 71**
**D-4156 Willich 1(DE)**

(74) Vertreter: **Zumstein, sen., Fritz, Dr. Dr. F. Zumstein sen.,**
**Dr. E. Assmann Dr. R. Koenigsberger**
**Dipl.-Ing. F. Klingseisen Dr. F. Zumstein jun.**
**Bräuhausstrasse 4**
**D-8000 München 2(DE)**

(54) **Segeltuch.**

(57) Segeltuch mit einer textilen Basislage (5), bei der wenigstens eine Oberfläche mit einem Kunststoffüberzug (10) versehen ist, der eine längs paralleler Linien verlaufende, die Luftströmung lenkende Strukturierung aufweist.

Fig. 1

Fig. 3

EP 0 034 189 A1

**0034189**

1/Zw/Li

Verseidag-Industrietextilien GmbH., Krefeld

### Segeltuch

Die Erfindung betrifft ein Segeltuch, dessen Oberfläche zur Beeinflussung der Richtung des längs dieser Oberfläche strömenden Windes strukturiert ist.

Segel werden üblicherweise aus dichten und sehr glatten Stoffen, also aus dicht eingestellten Geweben, hergestellt. Da diese Tuche eine vollkommen glatte Oberfläche aufweisen, versuchen die Segelmacher durch besondere Schnitte der Segel den antreibenden Kraftfluß des Windes optimal auszunutzen. So ist es versucht worden, durch Tuchstreifen verschiedener Gewichtsklassen bzw. durch Streifen verschiedenen Recks die aerodynamischen Eigenschaften der Segel günstig zu beeinflussen. Die sich hieraus ergebenden Möglichkeiten sind aber verhältnismäßig eng begrenzt, weil noch zahlreiche andere Faktoren zu berücksichtigen sind, beispielsweise die Windstärken.

Die der Erfindung zugrundeliegende Aufgabe besteht nun darin, die Richtung des längs der Oberfläche eines Segels strömenden Windes durch eine Ausgestaltung des Segeltuches selbst zu beeinflussen.

Diese Aufgabe wird gemäß der Erfindung dadurch gelöst,
daß man eine textile Basislage wenigstens an einer Oberfläche mit einem Kunststoffüberzug versieht, der eine längs
paralleler Linien verlaufende, die Luftströmung lenkende
Strukturierung aufweist.

Ein so ausgebildetes Segeltuch hat den
Vorteil , daß eine Beeinflussung der Strömungsrichtung
des Windes stattfindet, gleichgültig welchen Segelschnitt
man wählt. Außerdem wird durch diese Strukturierung das
Segeltuch griffig, was für die Handhabung der sperrigen
Segel beim Setzen und Bergen, besonders bei Behinderungen
durch bewegte See oder höhere Windstärken, von großem Vorteil ist.

Die Richtung, in der die Strukturierung verläuft, ist frei
wählbar, und in der Regel wird man eine Richtung wählen,
bei der eine Kanalisierung der an der Oberfläche des Segeltuchs strömenden Windes in horizontaler Richtung erfolgt.
Grundsätzlich ergibt sich jedoch die Möglichkeit, für jeden Segelschnitt eine optimale Richtung der längs paralleler Linien verlaufenden Strukturierungen auszuwählen.

Die Strukturierung selbst kann durch Kalandrieren, gegebenenfalls unter Wärmeeinwirkung, erfolgen.

Als Material für die Basislage eignen sich beispielsweise
Glas, Aramide, Kohle, Bor, Phenolpolymerisat, Polyester oder
Nylon. Auch Mischungen der oben genannten Stoffe können verwendet werden.

Das Material des Überzugs sind zweckmäßig Kunststoff, wie
Polyester, Polyimide, Fluorverbindungen, wie Tetrafluoräthylen oder Mischungen dieser Verbindungen. Die Verbin-

- 3 -

dung des Überzugs kann beispielsweise durch Heißverkleben oder Aufschmelzen bei Beschichtungen durch bekannte chemische Zusätze, wie Haftvermittler, erfolgen.

Eine besonders einfache und zweckmäßige Art besteht darin, daß eine Kunststoffolie mit der Basislage verbunden wird. Wenn die Folie nicht selbstklebend ist, dann erfolgt die Verbindung mittels eines Bindemittels, wobei die Folie nach der Verbindung mit der Basislage strukturiert wird, oder die Strukturierung vor dieser Verbindung erfolgt. Die Strukturierung vor dem Verkleben stabilisiert diesen Effekt, da nur die Erhöhungen, die der Basislage zugewandt sind, mit Bindemitteln bestrichen werden, und die Folie dann mit der Basislage verklebt wird. Die Strukturierung muß nicht notwendigerweise linienförmig sein, sie kann auch in Form von Punkten oder kleineren Flächen erfolgen, die jedoch dann so in Reihen angeordnet sein müssen, daß die gewünschte Beeinflussung der Windrichtung noch stattfinden kann.

Wählt man eine linienförmige Strukturierung, dann sind verschiedene Formen möglich, beispielsweise eine Strukturierung, bei der die Erhöhungen in einem Schnitt senkrecht zur Strukturierungsrichtung dreieckig sind oder, was besonders vorteilhaft ist, die Form von Rechtecken haben. Größe und Abstand der einzelnen Erhöhungen können sehr verschieden sein, beispielsweise im mm-Bereich liegen oder bis herab zu 1/100 cm gewählt werden.

Überraschend ist, daß durch eine Strukturierung, deren Abmessungen im Vergleich zur Größe eines Segels sehr gering sind, die Beeinflussung der Strömungsrichtung erreicht werden kann. Wenn man jedoch in Betracht zieht, daß die Bewegung der Luft in unmittelbarer Nähe der Oberfläche in einer Grenzschicht erfolgt, d.h. in einer Schicht, in der die

- 4 -

Strömungsgeschwindigkeit gegenüber der eigentlichen Windgeschwindigkeit gebremst ist, dann wird verständlich, daß
die unmittelbar die Oberfläche des Segels berührende Luft,
die die eigentliche Kraft auf das Segel ausübt, durch eine
feine Strukturierung beeinflußt werden kann.

Bei Segeln, die nur einseitig unter Winddruck stehen, kann
eine einseitige Beschichtung der Basislage mit Kunststoff
ausreichen, jedoch bei hochgetakelten Segeln, die bei Segelstellungen "am Wind" beidseitig der Windströmung ausgesetzt werden, ist eine beidseitige Abdeckung und Strukturierung zweckmäßig. Für eine solche beidseitige Abdeckung
sprechen auch andere Gesichtspunkt. Es ist nämlich wünschenswert, die Basislage vor der Einwirkung ultravioletter
Strahlung zu schützen, und außerdem ist eine elektrostatische Aufladung unerwünscht und soll nach Möglichkeit vermieden werden. Dies kann dadurch erreicht werden, daß in
die Überzüge Pigmente eingearbeitet werden,die ultraviolette Strahlen absorbieren, und daß leitende Stoffe zugegeben
werden, die eine elektrostatische Aufladung verhindern.

Die Erfindung wird im folgenden unter Bezugnahme auf die
Zeichnung erläutert, in der in

Fig. 1          schematisch ein Segel mit angedeuteter
                Strukturierung dargestellt ist.

Fig. 2          zeigt eine andere Form einer Strukturierung,

Fig. 3          zeigt den Querschnitt durch einen Segel-
                stoff mit dreieckförmiger Struktuerie-
                rung und

Fig. 4          zeigt den Querschnitt einer Strukturierung mit rechteckiger Form.


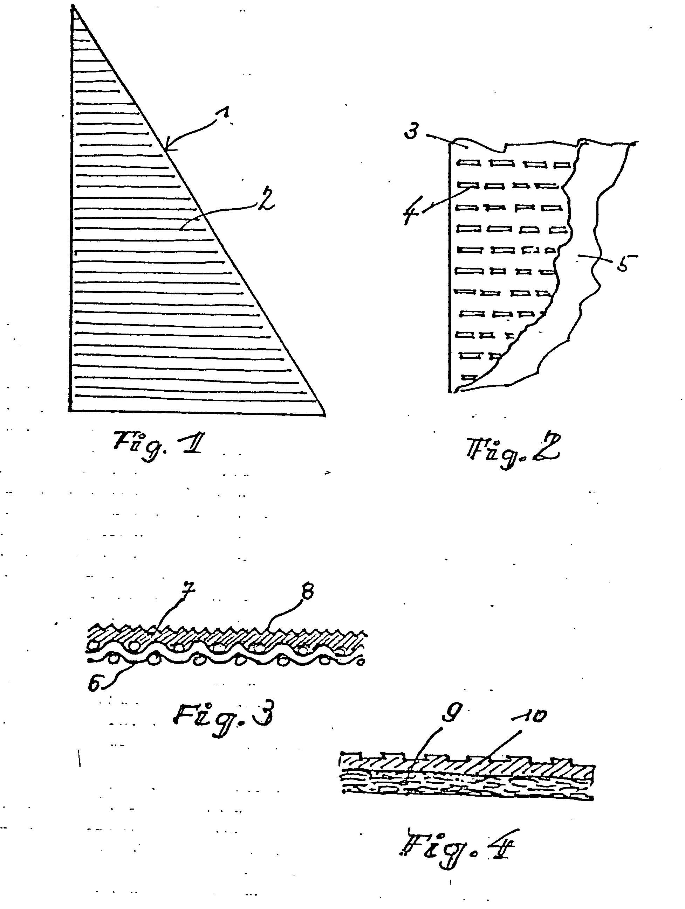

Aus Fig. 1 ersieht man, daß ein Segel 1 mit einer Strukturierung versehen ist, die längs paralleler horizontaler Linien verläuft.

Fig. 2 zeigt eine unterbrochene Strukturierung der auf eine Basislage 5 aufgebrachten Abdeckung 3, wobei die Flächen 4 in Reihen angeordnet sind, so daß insgesamt eine in der Zeichnung von links nach rechts verlaufende Strukturierung erfolgt. Die Basislage mit den Bindemittelflecken ist durch eine Kunststoffolie 5 abgedeckt, die mittels des Bindemittels mit der Basislage 3 verbunden ist.

Fig. 3 zeigt eine aus einem Gewebe bestehende Basislage 6, die mit einer Beschichtung 7 versehen ist, die durch eine Behandlung im Kalander so strukturiert ist, daß Rippen 8 gebildet werden, die im Querschnitt die Form eines Dreiecks haben.

Fig. 4 zeigt eine Basislage 9 aus einem Vlies, das mit einem Kunststoffüberzug 10 beschichtet ist, der durch eine Kalandrierung rechteckige Erhöhungen mit dazwischenliegenden, rechteckigen Vertiefungen erhalten hat.

- 6 -

Beispiel 1

| Polyamidgewebe | Kette | 52 Fdn/cm | 33 dtex |
| --- | --- | --- | --- |
| | Schuß | 44 " | " |

Beidseitig PTFE        Folie Dicke 12,5 μm
Gewebe farbig,         Folie klar
Strukturierung         80 Linien/cm

Beispiel 2

| Polyamidgewebe | Kette | 40 Fdn/cm | 67 dtex |
| --- | --- | --- | --- |
| | Schuß | 34 " | " |

1. Seite   PTFE     Folie Dicke 12,5 μm
2. Seite   PES       "     "      7  μm

Gewebe weiß          Folie farbig
Strukturierung       60 Linien/cm

Beispiel 3

| Polyestergewebe | Kette | 42 Fdn/cm | 140 dtex |
| --- | --- | --- | --- |
| | Schuß | 36 " | " |

1. Seite PTFE      Folie   Dicke  25
2. Seite PES        "       "      "

Gewebe weiß,         Folie klar
Strukturierung       5 Linien/cm

Beispiel 4

| Aramidgewebe | Kette | 30 | Fdn/cm | 220 dtex |
| --- | --- | --- | --- | --- |
| | Schuß | 28 | " | " |
| Beidseitig PES | Folie | 12,5 µm | | |
| Gewebe weiß, | Folie | farbig | | |
| Strukturierung | 30 | Linien/cm | | |

Beispiel 5

| Polyestergewebe | Kette | 29 | Fdn/cm | 280 dtex |
| --- | --- | --- | --- | --- |
| | Schuß | 33 | " | " |
| Beidseitig PTFE | Folie | 50 µm | | |
| Gewebe weiß, | Folie | klar | | |
| Strukturierung | 2 Linien/cm | | | |

Alle Beispiele können mit Überkaro durch Verdoppelung der
Kett- und Schußgarne oder durch Eintragen eines dickeren
Garnes in Abständen von 3 bis 20 mm versehen sein.

PATENTANSPRÜCHE

1. Segeltuch,
   g e k e n n z e i c h n e t    d u r c h
   eine textile Basislage, bei der wenigstens eine Oberfläche mit einem Kunststoffüberzug versehen ist, der
   eine längs paralleler Linien verlaufende, die Luftströmung lenkende Strukturierung aufweist.

2. Segeltuch nach Anspruch 1,
   d a d u r c h    g e k e n n z e i c h n e t ,
   daß die Basislage aus Fasern aus Glas, Aramiden, Kohle, Bor, Phenolpolymerisat, Polyester oder Nylon
   oder Mischungen dieser Fasern besteht.

3. Segeltuch nach Anspruch 1 oder 2,
   d a d u r c h    g e k e n n z e i c h n e t ,
   daß das Material des Überzugs aus Polyester, Polyimiden, Polyurethan, Fluorverbindungen, wie Tetrafluoräthylen, oder einer Mischung dieser Stoffe besteht.

4. Segeltuch nach Anspruch 1 bis 3,
   d a d u r c h    g e k e n n z e i c h n e t ,
   daß der Kunststoffüberzug mit der Basislage heiß verklebt oder heiß verschmolzen ist.

5. Segeltuch nach Anspruch 1 bis 3,
   d a d u r c h    g e k e n n z e i c h n e t ,
   daß der Kunststoffüberzug als Beschichtung durch
   chemische Einwirkung, z.B. durch einen Haftvermittler, mit der Basislage verbunden ist.

6. Segeltuch nach Anspruch 1 bis 5,
   d a d u r c h   g e k e n n z e i c h n e t ,
   daß der Überzug aus einer Folie besteht, die eine
   Stärke von 7 bis 50 µm, vorzugsweise 12,5 bis 25 µm,
   hat.

7. Segeltuch nach Anspruch 1 bis 5,
   d a d u r c h   g e k e n n z e i c h n e t ,
   daß der Überzug aus einer Beschichtung von 5 bis 30 g
   Auflage/m$^2$, vorzugsweise von 10 bis 25 g/m$^2$ besteht.

8. Segeltuch nach Anspruch 1 bis 4,
   d a d u r c h   g e k e n n z e i c h n e t ,
   daß der Kunststoffüberzug als Folie oder Beschichtung
   eine Strukturierung aus Rillen hat, von denen 20 bis
   80 pro cm angeordnet sind.

9. Segeltuch nach einem der vorhergehenden Ansprüche,
   d a d u r c h   g e k e n n z e i c h n e t ,
   daß die Strukturierung des Kunststoffüberzugs in
   einem senkrecht zur Strukturierung verlaufenden
   Schnitt dreieckige oder rechteckige Erhöhungen aufweist.

10. Segeltuch nach einem der vorhergehenden Ansprüche,
    d a d u r c h   g e k e n n z e i c h n e t ,
    daß die Basislage beidseitig einen Kunststoffüberzug
    aufweist.

11. Segeltuch nach einem der vorhergehenden Ansprüche,
    d a d u r c h   g e k e n n z e i c h n e t ,
    daß in den Kunststoff des Überzugs ein elektrisch leitendes Material, z.B. ein Metallpulver, eingearbeitet

- 3 -

ist.

12. Segeltuch nach einem der vorhergehenden Ansprüche, d a d u r c h  g e k e n n z e i c h n e t , daß in den Kunststoffüberzug Ultraviolettstrahlen absorbierende Farbpigmente eingearbeitet sind.

- 3 -

Fig. 1

Fig. 2

Fig. 3

Fig. 4

0034189

Europäisches
Patentamt
EUROPÄISCHER RECHERCHENBERICHT

Nummer der Anmeldung
EP 80 10 0729

| EINSCHLÄGIGE DOKUMENTE | | | KLASSIFIKATION DER ANMELDUNG (Int.Cl.³) |
|---|---|---|---|
| Kategorie | Kennzeichnung des Dokuments mit Angabe, soweit erforderlich, der maßgeblichen Teile | betrifft Anspruch | |
| | Z. INDUSTRIE TEXTILE, Nr. 1045, Mai 1975, Seiten 281, 282 "Du nouveau en tissage de voiles de navigation" * Seite 281 * -- | 1 | B 63 H 9/06 D 06 N 3/00 |
| | DE - A - 2 735 495 (CRAMER U. CO) * Figuren 1,2; Anspruch 1; Seiten 3,6 * -- | 1,2,3, 10 | |
| | US - A - 1 362 698 (HIGGONS) * Insgesamt * -- | 1,8 | RECHERCHIERTE SACHGEBIETE (Int Cl.³) |
| | US - A - 2 875 543 (SYLVESTER) * Figur 2; Anspruch 1 * -- | 1,8,9 | B 63 H F 15 D D 06 N D 06 Q |
| A | Z. TEXTIL-PRAXIS INTERNATIONAL; Band 31, No. 11, Nov. 1976, "Veredelung von Vliesstoffen durch Kalanderbehandlung", Seiten 1333-1338 * Seiten 1333, 1334 * -- | 4,9 | |
| | FR - A - 2 282 335 (FINGERCHUT) * Anspruch 1; Seite 1 * -- | 1,4 | KATEGORIE DER GENANNTEN DOKUMENTE

X: von besonderer Bedeutung A: technologischer Hintergrund O: nichtschriftliche Offenbarung P: Zwischenliteratur T: der Erfindung zugrunde liegende Theorien oder Grundsätze |
| A | FR - A - 2 275 359 (GREZE) * Ansprüche 1,2,4,5 * ---- | 11 | E: kollidierende Anmeldung D: in der Anmeldung angeführtes Dokument L: aus andern Gründen angeführtes Dokument |
| | | | &: Mitglied der gleichen Patent- familie, übereinstimmendes Dokument |

| | | |
|---|---|---|
| Der vorliegende Recherchenbericht wurde für alle Patentansprüche erstellt | | |
| Recherchenort: Den Haag | Abschlußdatum der Recherche 10-10-1980 | Prüfer LUKAS |

EPA form 1503.1 06.78